# EUROPEAN PATENT APPLICATION

(11) **EP 4 163 996 A1**
(43) Date of publication of application: **12.04.2023**
(21) Application number: 21822915.1
(22) Date of filing: 06.05.2021
(51) Int. Cl.: H01M 4/136, H01M 4/1397, H01M 4/62

(54) **POSITIVE ELECTRODE MIXTURE FOR COMPOSITE ALL-SOLID-STATE LITHIUM SULFUR BATTERY**

(30) Priority: 09.06.2020 JP 2020100159
(71) Applicant: National Institute Of Advanced Industrial Science and Technology, Chiyoda-ku Tokyo 100-8921 (JP); Nagase & Co., Ltd., Osaka-shi Osaka 550-8668 (JP); NAGASE CHEMTEX CORPORATION, Osaka 550-8668 (JP)
(72) Inventor: NAGATA, Hiroshi, Tsukuba-shi, Ibaraki 305-8565 (JP); AKIMOTO, Junji, Tsukuba-shi, Ibaraki 305-8565 (JP); HOSHI, Takehiko, Tokyo 103-8355 (JP); YABE, Tadayuki, Tokyo 103-8355 (JP); CHIKUSA, Yasuo, Tatsuno-shi, Hyogo 679-4124 (JP); OTSUKI, Tetsuya, Tatsuno-shi, Hyogo 679-4124 (JP)
(74) Representative: Mewburn Ellis LLP
(86) International application number: PCT/JP2021/017332
(87) International publication number: WO 2021/251031

(57) **Abstract**

The present invention provides a cathode mixture that can be suitably used in a cathode mixture layer of an all-solid-state lithium-sulfur battery having an excellent charge/discharge capacity and a method of producing the cathode mixture, by maximally utilizing excellent physical properties of sulfur. The present invention relates to a positive electrode mixture for composite all-solid-state lithium-sulfur batteries, the positive electrode mixture containing sulfur or its discharge product (A); phosphorus pentasulfide (B); conductive carbon (C); and lithium halide (D) at a weight ratio of A:B:C:D of 40-60:15-35:5-20:16-30, wherein a peak at 50 ppm in 31P-MAS NMR has a relative intensity of 40% or less.

## Description

### TECHNICAL FIELD

The present invention relates to a positive electrode mixture for composite all-solid-state lithium-sulfur batteries and a method of producing a positive electrode mixture for all-solid-state lithium-sulfur batteries.

### BACKGROUND ART

Having a high energy density, lithium-ion batteries are used in many mobile devices, such as communication devices, and electronic vehicles. Recent attention has focused on lithium-sulfur batteries capable of further improving the energy density. Lithium sulfur batteries are roughly categorized into two groups: liquid lithium-sulfur batteries using an organic electrolyte solution as an electrolyte; and all-solid-state lithium-sulfur batteries using a solid electrolyte.

The liquid lithium-sulfur batteries have a problem in that lithium polysulfide generated during charge/discharge reaction dissolves into an electrolyte solution, adversely affecting the charge/discharge capacity and life of the batteries. In contrast, the all-solid-state lithium-sulfur batteries in which lithium polysulfide does not dissolve into an electrolyte solution are suitable for maintaining the charge/discharge capacity and prolonging the life of the batteries.

In the all-solid-state lithium-sulfur batteries, however, the anode, the solid electrolyte layer, and the cathode mixture layer are substantially free of solvents so that solid-to-solid contact occurs, and the sulfur contained as a cathode active material in the cathode mixture layer is electrically insulating. Thus, the cathode mixture layer has very low electron conductivity and very low lithium-ion conductivity. In particular, when the cathode mixture is filled with sulfur at a high proportion, disadvantageously, the all-solid-state lithium-sulfur batteries exhibit poor reactivity during charge/discharge reaction, failing to ensure a sufficient charge/discharge capacity.

Patent Literature 1 suggests an electrode material of an all-solid-state lithium-sulfur battery, the electrode material containing sulfur and its discharge product as a cathode active material of a cathode; conductive carbon; and a high-phosphorus content solid electrolyte containing lithium atoms, phosphorus atoms, and sulfur atoms. Patent Literature 2 suggests an electrode material using a solid electrolyte containing lithium, phosphorus, iodine, and sulfur atoms. Presumably, the electrode materials disclosed in these literatures can improve the battery performance of all-solid-state lithium batteries.

### CITATION LIST

### - Patent Literature

Patent Literature 1: JP 2015-072781 A
Patent Literature 2: JP 2015-146281 A

### SUMMARY OF INVENTION

### - Technical Problem

However, the methods of producing a cathode mixture disclosed in Patent Literatures 1 and 2 each include two steps: first, synthesizing a solid electrolyte; and then, synthesizing a cathode mixture. These methods have disadvantages particularly in that the time required for synthesis of a solid electrolyte is long and the mass productivity is poor. The present invention aims to provide a cathode mixture that can be suitably used in a cathode mixture layer of an all-solid-state lithium-sulfur battery having an excellent charge/discharge capacity and a method of producing the cathode mixture, by maximally utilizing excellent physical properties of sulfur.

### - Solution to Problem

The present inventors extensively studied cathode mixtures for use in all-solid-state lithium-sulfur batteries. As a result, they found that a cathode mixture containing sulfur or its discharge product (A), phosphorus pentasulfide (B), conductive carbon (C), and lithium halide (D) at a specific ratio has a high charge/discharge capacity. They also found that the mass productivity can be improved when the cathode mixture is formed into a composite in one step. The present invention was thus completed.

Specifically, the present invention relates to a positive electrode mixture for composite all-solid-state lithium-sulfur batteries, the positive electrode mixture containing sulfur or its discharge product (A); phosphorus pentasulfide (B); conductive carbon (C); and lithium halide (D) at a weight ratio of A:B:C:D of 40-60:15-35:5-20:16-30, wherein a peak at 50 ppm in 31P-MAS NMR has a relative intensity of 40% or less.

The present invention also relates to a method of producing a positive electrode mixture for all-solid-state lithium-sulfur batteries, the method including mechanically milling a mixture containing sulfur or its discharge product (A), phosphorus pentasulfide (B), conductive carbon (C), and lithium halide (D) at a weight ratio of A:B:C:D of 40-70:10-50:5-20:1-30.

The present invention also relates to a method of producing a positive electrode mixture for all-solid-state lithium-sulfur batteries, the method including mechanically milling a mixture containing sulfur or its discharge product (A), phosphorus pentasulfide (B), conductive carbon (C), and lithium halide (D) at a weight ratio of A:B:C:D of 40-70:10-50:5-20:0-30 at a gravitational acceleration of 20 G or less for 10 hours or less.

In the production methods described above, preferably, a peak at 50 ppm in 31P-MAS NMR of the cathode mixture has a relative intensity of 40% or less.

Preferably, the conductive carbon (C) has a specific surface area of 1000 m²/g or more.

Preferably, the sulfur or its discharge product (A) is a mixture containing sulfur and lithium sulfide at a weight ratio of sulfur:lithium sulfide of 100-70:0-30.

Preferably, the lithium halide (D) is lithium iodide.

### - Advantageous Effects of Invention

The positive electrode mixture for composite all-solid-state lithium-sulfur batteries of the present invention has a high charge/discharge capacity. According to the production method of the present invention, the cathode mixture can be formed into a composite in one step, which can improve the productivity.

### DESCRIPTION OF EMBODIMENTS

### <<Positive electrode mixture for composite all-solid-state lithium-sulfur batteries>>

The positive electrode mixture for composite all-solid-state lithium-sulfur batteries of the present invention is a positive electrode mixture for composite all-solid-state lithium-sulfur batteries, the positive electrode mixture containing sulfur or its discharge product (A); phosphorus pentasulfide (B); conductive carbon (C); and lithium halide (D) at a weight ratio of A:B:C:D of 40-60:15-35:5-20:16-30, wherein a peak at 50 ppm in 31P-MAS NMR has a relative intensity of 40% or less.

The components (A) to (D) for use in the production of the cathode mixture are described.

### <Sulfur or its discharge product (A)>

The sulfur or its discharge product (A) functions as a cathode active material in the cathode mixture. The sulfur may be elemental sulfur, for example. Examples of the discharge product of sulfur include, but are not limited to, lithium polysulfides such as Li₂S₈, Li₂S₄, and Li₂S₂, and lithium sulfide (Li₂S) . These compounds may be used alone or in combination of two or more. These compounds may also be used with elemental sulfur.

The sulfur or its discharge product (A) is preferably a mixture containing sulfur and lithium sulfide at a weight ratio of sulfur:lithium sulfide of 100-70:0-30. The weight ratio is more preferably 100-80:0-20. When the amount of sulfur is less than the weight ratio of sulfur:lithium sulfide of 70:30, the capacity tends to decrease.

### <Phosphorus pentasulfide (B)>

The phosphorus pentasulfide (B) functions as a solid electrolyte in the cathode mixture. The phosphorus pentasulfide (B) can reduce the resistance (reaction resistance) during reaction of sulfur, electrons, and lithium ions at the reaction interface and can improve the charge/discharge capacity of the all-solid-state lithium-sulfur battery.

### <Conductive carbon (C)>

The conductive carbon (C) establishes an electronic network in the cathode mixture and compensates for low electrical conductivity of the sulfur or its discharge product (A). Specific examples of the conductive carbon (C) include carbon nanotube, active carbon, and graphene. Of these, active carbon is preferred because it brings a significant effect of improving the charge/discharge capacity.

Preferably, the conductive carbon (C) has a large surface area in order to improve the charge/discharge capacity by establishing an electronic network. The specific surface area of the conductive carbon (C) is preferably 1000 m²/g or more, more preferably 1500 m²/g or more, still more preferably 2000 m²/g or more. When the specific surface area is less than 1000 m²/g, it is not possible to sufficiently increase reaction points between the sulfur and/or its discharge product (A) and the conductive carbon (C), so that the effect of improving the charge/discharge capacity tends to be insufficient. The upper limit of the specific surface area is not limited but is usually 6000 m²/g or less.

In the present invention, the term "specific surface area" refers to a BET specific surface area determined by Brenauer-Emmet-Telle (BET) method. Specifically, it is determined using a nitrogen adsorption isotherm measured by adsorbing nitrogen gas onto samples of conductive materials (C1) and (C2) described later at a liquid nitrogen temperature.

As an apparatus to determine the BET specific surface area, for example, an automatic specific surface area/pore distribution measuring apparatus (BELSORP-mini II, BEL Japan, Inc.) may be used.

### <Lithium halide (D)>

The lithium halide (D) compensates for low electrical conductivity of the sulfur or its discharge product (A) in the cathode mixture. The lithium halide (D) in the solid state is evenly mixed with the sulfur in the solid state or its discharge product (A) to form a solid solution, and halide ions are partly replaced by sulfide ions in the sulfur or its discharge product (A), improving the ionic conductivity of the sulfur or its discharge product (A). Examples of the lithium halide (D) include lithium iodide, lithium chloride, lithium chloride, lithium bromide, and lithium fluoride. Of these, lithium iodide is preferred in terms of conductivity.

Preferred combinations of the sulfur or its discharge product (A), the phosphorus pentasulfide (B), the conductive carbon (C), and the lithium halide (D) include combinations of (A) sulfur, or lithium polysulfide or lithium sulfide, (B) phosphorus pentasulfide, (C) carbon nanotube, active carbon, or graphene, and (D) lithium iodide, lithium chloride, lithium chloride, lithium bromide, or lithium fluoride. More preferred combinations include combinations of (A) sulfur or lithium sulfide, (B) phosphorus pentasulfide, (C) active carbon, and (D) lithium iodide.

### <Ratio>

The cathode mixture of the present invention contains the sulfur or its discharge product (A); the phosphorus pentasulfide (B); the conductive carbon (C); and the lithium halide (D) at a weight ratio of A:B:C:D of 40-60:15-35:5-20:16-30.

When the proportion of the sulfur or its discharge product (A) is lower than the above range, the amount of lithium ions capable of transferring to the cathode may small, resulting in an insufficient charge/discharge capacity, whereas when the proportion is higher than the above range, the amount of the conductive carbon (C) may be small, resulting in a low charge/discharge capacity per cathode mixture. The amount of the sulfur or its discharge product (A) is preferably 45 to 60 wt%, more preferably 50 to 55 wt% of the total amount of the components (A), (B), (C), and (D).

When the proportion of the phosphorus pentasulfide (B) is lower than the above range, the charge/discharge reaction tends to proceed insufficiently and the charge/discharge capacity tends to decrease, whereas when the proportion is higher than the above range, the amount of lithium ions capable of transferring to the cathode tends to be small because the amount of the sulfur or its discharge product is small. The amount of the phosphorus pentasulfide (B) is preferably 15 to 30 wt% of the total amount of the components (A), (B), (C), and (D).

When the proportion of the conductive carbon (C) is lower than the above range, the charge/discharge reaction tends to stop due to insufficient electron conduction, whereas when the proportion is higher than the above range, the charge/discharge reaction tends to stop due to interference with lithium-ion conduction. The amount of the conductive carbon (C) is preferably 5 to 20 wt%, more preferably 8 to 15 wt% of the total amount of the components (A), (B), (C), and (D).

When the proportion of the lithium halide (D) is lower than the above range, the lithium-ion conductivity tends to decrease, whereas when the proportion is higher than the above range, the amount of lithium ions capable of transferring to the cathode tends to be small because the amount of the component (A) is small. The amount of the lithium halide (D) is preferably 17 to 28 wt%, more preferably 20 to 25 wt% of the total amount of the components (A), (B), (C), and (D).

The amounts of the sulfur or its discharge product (A), the phosphorus pentasulfide (B), conductive carbon (C), and the lithium halide (D) are preferably such that the weight ratio of A:B:C:D is 40-60:15 to 35:5-20:20 to 25.

In the present invention, the term "composite" does not refer to a mere mixture of specific components but refers to a mixture of specific components to which a mechanical, thermal, or chemical energy has been applied to cause part or all of the specific components to undergo a chemical reaction.

In the cathode mixture of the present invention, the components (A) to (D) are sufficiently combined into a composite in which the phosphorus pentasulfide (B) is imparted with lithium-ion conductivity. As a result, the residual amount of the phosphorus pentasulfide (B) is decreased. Thus, the peak of the phosphorus pentasulfide at 50 ppm in 31P-MAS NMR has a relative intensity of 40% or less. The relative intensity is preferably 35% or less, more preferably 30% or less. When the relative intensity is more than 40%, the components are not sufficiently combined into a composite.

The relative intensity is calculated under the following conditions. The 31P-MAS NMR of the cathode mixture produced is recorded using Avance III HD 600WB available from Bruker, with ammonium phosphate (1.0 ppm) as an external standard. The relative intensity at 50 ppm where the peak of phosphorus pentasulfide occurs is calculated, taking the maximum intensity and the minimum intensity of each component as 100 and 0, respectively.

### <Optional components>

The cathode mixture of the present invention may be a composite in which optional components such as a binder, a solvent, an ion-conductive material, and a conductive material are combined together, in addition to the components (A) to (D).

### <Binder>

The binder is not limited, and thermoplastic resins, thermosetting resins, and the like can be used. Examples include polyethylene, polypropylene, polytetrafluoroethylene (PTFE), polyvinylidene fluoride (PVDF), styrene butadiene rubber, tetrafluoroethylene-hexafluoroethylene copolymer, tetrafluoroethylene-hexafluoropropylene copolymer (FEP), tetrafluoroethylene-perfluoroalkylvinylether copolymer (PFA), vinylidene fluoride-hexafluoropropylene copolymer, vinylidene fluoride-chlorotrifluoroethylene copolymer, ethylene-tetrafluoroethylene copolymer (ETFE resin), polychlorotrifluoroethylene (PCTFE), vinylidene fluoride-pentafluoropropylene copolymer, propylene-tetrafluoroethylene copolymer, ethylene-chlorotrifluoroethylene copolymer (ECTFE), vinylidene fluoride-hexafluoropropylene-tetrafluoroethylene copolymer, vinylidene fluoride-perfluoromethylvinylether-tetrafluoroethylene copolymer, ethylene-acrylate copolymer, polyacrylic acid, sodium polyacrylate, lithium polyacrylate, polymethacrylic acid, sodium polymethacrylate, and lithium polymethacrylate. These binders may be used alone or in combinations of two or more.

When the cathode mixture of the present invention contains any of these binders, the amount thereof is not limited, but it is preferably 0.01 to 10% by weight of the cathode mixture.

### <Solvent>

The cathode mixture obtained by mixing a solvent facilitates the production of a cathode mixture layer. The solvent is removed by drying in the production of a cathode mixture layer. Examples of the solvent include, but are not limited to, amine solvents such as N,N-dimethylaminopropylamine and diethylenetriamine; ether solvents such as tetrahydrofuran; ketone solvents such as methyl ethyl ketone; ester solvents such as methyl acetate; amide solvents such as dimethylacetamide and 1-methyl-2-pyrrolidone; and hydrocarbon solvents such as toluene, xylene, n-hexane, and cyclohexane. These solvents may be used alone or in combinations of two or more.

When the cathode mixture of the present invention is obtained by mixing any of these solvents, the amount thereof is not limited, but it is preferably 10 to 10000 parts by weight relative to 100 parts by weight of the solids of the cathode mixture.

### <Ion-conductive material>

The cathode mixture of the present invention may contain an ion-conductive material different from the phosphorus pentasulfide (B). The ion-conductive material may be a composite of Li, S, and P, for example. Specific examples include a composite obtained by mechanically milling Li₂S, S, and P, and a composite obtained by mechanically milling Li₂S and PₓS_{y} (where x and y independently represent integers that give a stoichiometric ratio). Mechanical milling allows bonds to be easily rearranged and can provide an amorphous ion-conductive material.

Preferably, the ion-conductive material contains phosphorus at a weight ratio of 0.2 to 0.55. More preferably, the ion-conductive material contains phosphorus at a weight ratio of 0.2 to 0.45. When the amount of phosphorus in the weight ratio is less than 0.2 or more than 0.55, an all-solid-state sodium-sulfur battery containing such an amount of phosphorus tends to fail to provide a sufficient charge/discharge capacity.

The composite of Li₂S and PₓS_{y} may further contain a lithium salt and a lithium nitride. The lithium salt is not limited, and examples include Li₃PO₄, Li₄SiO₄, Li₂O, and LiBH₄. Examples of the lithium nitride is not limited, and examples include Li₃N.

### <Conductive material>

In addition to the conductive carbon (C), at least one selected from the group consisting of graphite, acetylene black, furnace black (for example, furnace black having a hollow shell structure), carbon nanotube, and carbon fiber may be present as the conductive material. This is because when the conductive carbon (C) has a low conductivity, additional conductive material can improve the electron conductivity in the cathode mixture, which can sometimes further improve the charge/discharge capacity.

The furnace black having a hollow shell structure is one kind of conductive furnace black and has a hollow shell structure with a porosity of about 60 to 80%. The term "hollow shell structure" refers to a structure in which an outer shell in particle form is formed by thinly assembled graphite crystals, and the inside of the outer shell is hollow. Examples of the furnace black having a hollow shell structure include Ketjen black (Lion Corporation).

When the conductive material is present, the weight ratio of the conductive carbon (C) to the conductive material (conductive carbon (C):conductive material) is preferably 9.5:0.5 to 5:5. This is because the charge/discharge reaction can be promoted by increasing the amount of the conductive material (C) to provide many reaction points with the sulfur or its discharge product (A) .

### <Method of producing cathode mixture>

The cathode mixture of the present invention can be obtained by blending the components (A) to (D) with optional components if necessary. These components may be mixed by any conventional method, such as, for example, by using Planetary Ball Mill (Fritsch), Hybridization System (Nara Machinery Co., Ltd.), Cosmos (Kawasaki Heavy Industries, Ltd.), Mechano Fusion System (Hosokawa Micron Corporation), Nobilta NOB (Hosokawa Micron Corporation), Mechanomill (Okada Seiko Co., Ltd.), Thetacomposer (Tokuju Corporation), Nanosonic Mill (Inoue MFG., Inc.), Kneader (Inoue MFG., Inc.), Supermasscolloider (Masuko Sangyo Co., Ltd.), nano-mech REACTOR (Techno-eye), Konel Despa (Asada Iron Works Co., Ltd.), Planetary Mixer (Asada Iron Works Co., Ltd.), Miracle KCK (Asada Iron Works Co., Ltd.), orVibration Mill (Matsubo Corporation).

In the production of the cathode mixture, after the components are mixed, the mixture may be heated. This is because heat treatment can increase the strength of the contact interface of the sulfur or its discharge product (A), the phosphorus pentasulfide (B), the conductive carbon (C) and the lithium halide (D) in the cathode mixture and thus can reduce the interfacial resistance. The heat treatment may be carried out in any manner, such as, for example, at 80°C to 250°C, preferably 100°C to 200°C, for one second to 10 hours in an atmosphere of argon, nitrogen, air or the like. The heat treatment may be carried out using a conventionally known heating apparatus. Specific examples include constant temperature dryers, fan dryers, vacuum dryers, and infrared dryers.

### <<Method 1 of producing positive electrode mixture for all-solid-state lithium-sulfur battery>>

The method 1 of producing a positive electrode mixture for all-solid-state lithium-sulfur batteries of the present invention includes mechanically milling a mixture containing sulfur or its discharge product (A), phosphorus pentasulfide (B), conductive carbon (C), and lithium halide (D) at a weight ratio of A:B:C:D of 40-70:10-50:5-20:1-30.

The details of the components (A) to (D) and a preferred weight ratio of the component (C) are as described above for the cathode mixture.

In the production method 1, when the proportion of the sulfur or its discharge product (A) is lower than the above range, the amount of lithium ions capable of transferring to the cathode may be small, resulting in an insufficient charge/discharge capacity, whereas when the proportion is higher than the above range, the amount of the conductive carbon (C) may be small, resulting in a low charge/discharge capacity per cathode mixture. The amount of the sulfur or its discharge product (A) is preferably 45 to 60 wt%, more preferably 50 to 55 wt% of the total amount of the components (A), (B), (C), and (D).

In the production method 1, when the proportion of the phosphorus pentasulfide (B) is lower than the above range, the charge/discharge reaction tends to proceed insufficiently and the charge/discharge capacity tends to decrease, whereas when the proportion is higher than the above range, the amount of lithium ions capable of transferring to the cathode tends to be small because the amount of the sulfur or its discharge product is small. The amount of the phosphorus pentasulfide (B) is preferably 15 to 30 wt% of the total amount of the components (A), (B), (C), and (D).

In the production method 1, when the proportion of the lithium halide (D) is higher than the above range, the amount of lithium ions capable of transferring to the cathode tends to be small because the amount of the component (A) is small. The amount of the lithium halide (D) is preferably 17 to 28 wt%, more preferably 20 to 25 wt% of the total amount of the components (A), (B), (C), and (D).

In the production method 1, mechanical milling is performed with the lithium halide (D) as an essential component, whereby the bonds of the components added can be easily rearranged and an amorphous positive electrode mixture can be obtained. The mechanical milling can be performed according to a conventionally known method. For example, a method using a device such as a planetary ball mill, a vibration mill, or a high sheer/high compression rotating assembly can be used. When a planetary ball mill is used, the treatment may be performed at a rotation speed of 225 to 500 rpm and a revolution speed of 450 to 1000 rpm (in the counter direction to the rotation) for 0.5 to 10 hours. Specific examples of the high sheer/high compression rotating assembly include Miralo available from Nara Machinery Co., Ltd. and Nobilta available from Hosokawa Micron Corporation.

In the production method 1, after the components are mixed, the mixture may be heated. The heat treatment may be carried out in any manner, such as, for example, at 80°C to 250°C, preferably 100°C to 200°C, for one second to 10 hours in an atmosphere of argon, nitrogen, air or the like. The heat treatment may be carried out using a conventionally known heating apparatus. Specific examples include constant temperature dryers, fan dryers, vacuum dryers, and infrared dryers.

### <<Method 2 of producing a positive electrode mixture for all-solid-state lithium-sulfur batteries>>

The method 2 of producing a positive electrode mixture for all-solid-state lithium-sulfur batteries of the present invention includes mechanically milling a mixture containing sulfur or its discharge product (A), phosphorus pentasulfide (B), conductive carbon (C), and lithium halide (D) at a weight ratio of A:B:C:D of 40-70:10-50:5-20:0-30 at a gravitational acceleration of 20 G or less for 10 hours or less.

The details of the components (A) to (D) and a preferred weight ratio of the component (C) are as described above for the cathode mixture.

In the production method 2, when the proportion of the sulfur or its discharge product (A) is lower than the above range, the amount of lithium ions capable of transferring to the cathode may be small, resulting in an insufficient charge/discharge capacity, whereas when the proportion is higher than the above range, the amount of the conductive carbon (C) may be small, resulting in a low charge/discharge capacity per cathode mixture. The amount of the sulfur or its discharge product (A) is preferably 45 to 60 wt%, more preferably 50 to 55 wt% of the total amount of the components (A), (B), (C), and (D).

In the production method 2, when the proportion of the phosphorus pentasulfide (B) is lower than the above range, the charge/discharge reaction tends to proceed insufficiently and the charge/discharge capacity tends to decrease, whereas when the proportion is higher than the above range, the amount of lithium ions capable of transferring to the cathode tends to be small because the amount of the sulfur or its discharge product is small. The amount of the phosphorus pentasulfide (B) is preferably 10 to 40 wt%, more preferably 15 to 30 wt% of the total amount of the components (A), (B), (C), and (D).

In the production method 2, when the proportion of the lithium halide (D) is higher than the above range, the amount of lithium ions capable of transferring to the cathode tends to be small because the amount of the component (A) is small. The amount of the lithium halide (D) is preferably 0 to 25 wt%, more preferably 10 to 25 wt% of the total amount of the components (A), (B), (C), and (D) .

In the production method 2, examples of the mechanical milling include bead milling and ball milling. The ball milling can be performed using a device such as a planetary ball mill. The bead milling can be performed using a device such as a batch type vertical sand mill available from Aimex Co., Ltd. The mechanical milling is performed at a gravitational acceleration of 20 G or less for 10 hours or less. The gravitational acceleration and the treatment time are preferably 16 G or less and 10 hours or less, more preferably 15 G or less and 8 hours or less, still more preferably 12 G or less and 4 hours or less. When the gravitational acceleration is more than 20 G or when the treatment time is more than 10 hours, the conductive material is excessively dispersed, and the electron conductivity tends to decrease.

In the production method 2, after the components are mixed, the mixture may be heated. The heat treatment may be carried out in any manner, such as, for example, at 80°C to 250°C, preferably 100°C to 200°C, for one second to 10 hours in an atmosphere of argon, nitrogen, air or the like. The heat treatment may be carried out using a conventionally known heating apparatuses. Specific examples include constant temperature dryers, fan dryers, vacuum dryers, and infrared dryers.

### <<All-solid-state lithium-sulfur battery>>

The all-solid-state lithium-sulfur battery includes a cathode mixture layer containing the cathode mixture of the present invention, a solid electrolyte layer, an anode, and a collector.

The term "all-solid-state" as used herein refers to one that uses a polymeric solid electrolyte and/or an inorganic solid electrolyte as the electrolyte, in which the anode, the solid electrolyte layer and the cathode mixture layer are substantially free of solvents. The phrase "substantially free of solvents" as used herein means that a trace amount of solvent may be left.

The all-solid-state lithium-sulfur battery includes an anode, a solid electrolyte layer, and a cathode mixture layer which are laminated in this order, and also includes collectors (an anode collector and a cathode collector) on its sides. The collectors (the anode collector and the cathode collector), the anode, the solid electrolyte layer, and the cathode mixture layer are described in this order below.

### <Collectors>

The collectors are not limited. For example, Al, Cu, Ni, stainless steel and the like can be used. As the anode collector, Cu is preferably used because of its difficulty in forming an alloy with lithium and easy processability into a thin membrane. As the cathode collector, Al is preferably used because of its easy processability into a thin membrane and low cost.

### <Anode>

The anode is not limited as long as it contains a material that absorbs and releases lithium ions as the anode active material. Examples of the material that absorbs and releases lithium ions include metal lithium, lithium alloys, metal oxides, metal sulfides, and carbonaceous materials that absorb and release lithium ions. Examples of the lithium alloys include alloys of lithium with aluminium, silicon, tin, magnesium, indium, calcium or the like. Examples of the metal oxides include tin oxides, silicon oxides, lithium titanium oxides, niobium oxides, and tungsten oxides. Examples of the metal sulfides include tin sulfides and titanium sulfides. Examples of the carbonaceous materials that absorb and release lithium ions include graphite, coke, mesophase pitch carbon fibers, spherical carbon, and resin baked carbon.

The anode may be obtained by any method. Examples include a method in which the material that absorbs and releases lithium ions is pressed, and a method in which an anode precursor dispersion containing the material that absorbs and releases lithium ions and a solvent is applied to an anode collector, dried and pressed. The solvent contained in the anode precursor dispersion may be as mentioned for the cathode mixture. The solvent is used to facilitate application of the anode precursor dispersion and is removed by drying after application.

### <Solid electrolyte layer>

The solid electrolyte layer may be formed of a polymeric solid electrolyte and/or an inorganic solid electrolyte. The inorganic solid electrolyte may be a solid electrolyte having a conductivity of 0.1 mS/cm or higher, for example. Although the solid electrolyte is not limited as long as it has a conductivity of 0.1 mS/cm or higher, specific examples include lithium salts, lithium sulfides, lithium oxides, and lithium nitrides.

The solid electrolyte is preferably a lithium salt, a lithium sulfide, or a combination thereof, because of their high electric conductivity and low grain boundary resistance.

Examples of the lithium salts include, but are not limited to, LiBH₄ and LiI. Examples of the lithium sulfides include, but are not limited to, composites with the PₓS_{y} described above, specifically, the composites of Li₂S and PₓS_{y} described above. Other examples include composites of Li₂S and PₓS_{y} together with GeS₂, SiS₂, Li₃PO₄, Li₄SiO₄, or the like. Examples of the lithium oxides include, but are not limited to, Li₂O and Li₂O₂. Examples of the lithium nitrides include, but are not limited to, Li₃N. These solid electrolytes may be used alone or in combinations of two or more.

The solid electrolyte layer formed of the inorganic solid electrolyte may be obtained by, for example, a method in which the solid electrolyte is press-formed or a method in which the solid electrolyte is dispersed in a solvent and the dispersion is then applied and dried. The method in which the solid electrolyte is press-formed is not limited and may be carried out for example by sandwiching and pressing the solid electrolyte between an anode collector and a cathode collector, or by pressing the solid electrolyte using a jig of a press. When the solid electrolyte layer is obtained by the method in which the solid electrolyte is dispersed in a solvent and the dispersion is then applied and dried, the dried solid electrolyte layer may be pressed in the same manner as described above. The solvent used for dispersing the solid electrolyte may be as mentioned for the cathode mixture. In the production of the solid electrolyte layer by any of these methods, heat treatment may be performed at any timing in order to reduce the interfacial resistance of the solid electrolyte layer and to improve the denseness thereof. Examples of solid electrolyte layers made of the polymeric solid electrolyte include polyethylene oxide polymers containing lithium salts such as lithium perchlorate or lithium bis(trifluoromethanesulfonyl) amide.

### <Cathode mixture layer>

The cathode mixture layer may be obtained by, for example, a method in which the cathode mixture is supported on a cathode collector or a method in which the cathode mixture is press-formed. The method in which the cathode mixture is supported on a cathode collector is not limited and may be carried out for example by press-forming the cathode mixture, or by making the cathode mixture into a paste using an organic solvent or the like, applying the cathode mixture to a cathode collector, drying and then adhering them by, for example, pressing. The method in which the cathode mixture is press-formed is not limited and may be carried out for example by sandwiching and pressing the cathode mixture between a solid electrolyte layer and a cathode collector, or by pressing the solid electrolyte using a jig of a press. The cathode mixture may be applied to a cathode collector by any method, such as slit die coating, screen coating, curtain coating, knife coating, gravure coating, or electrostatic spray coating. In the production of the cathode mixture layer by any of these methods, heat treatment may be performed at any timing in order to reduce the interfacial resistance of the cathode mixture layer and to improve the denseness thereof.

The all-solid-state lithium-sulfur battery may include a separator and the like in addition to the above-described anode collector, anode, solid electrolyte layer, cathode mixture layer, and cathode collector. The all-solid-state lithium-sulfur battery may have any shape, such as a coin, button, sheet, laminate, cylindrical, flat, or rectangular shape.

### <Method of producing all-solid-state lithium-sulfur battery>

The all-solid-state lithium-sulfur battery may be produced by any method such as those described below.

First, a solid electrolyte is sandwiched and pressed between an anode collector and a cathode collector to produce a solid electrolyte layer. Next, a cathode mixture is deposited on one side of the solid electrolyte layer and the stack is sandwiched and pressed between the collectors (the anode collector on the solid electrolyte layer side, and the cathode collector on the cathode mixture side). Thus, the cathode mixture layer and the cathode collector are laminated on one surface of the solid electrolyte layer, and the anode collector is laminated on the other surface of the solid electrolyte layer. Finally, after the anode collector is removed temporarily, an anode is put on the solid electrolyte layer on the side opposite to the cathode mixture layer and then the anode collector is put on the anode side, followed by pressing. Thus, the anode and the anode collector are laminated on the other surface of the solid electrolyte layer. The layers may be pressed one by one as described above, or two or more layers may be deposited and pressed together to form a laminate. The all-solid-state lithium-sulfur battery can be produced by such a method.

### <Application of all-solid-state lithium-sulfur battery>

The all-solid-state lithium-sulfur battery may be used in any application. For example, the all-solid-state lithium-sulfur battery is suitable for electrical products that require high energy density, such as hybrid vehicles and electric vehicles.

### EXAMPLES

The present invention is described with reference to examples, but the present invention is not limited to these examples.

### 1. Materials used

The following materials were used in the examples and comparative examples.
1-1. Sulfur or its discharge product (A)
Sulfur (FUJIFILM Wako Pure Chemical Corporation)
Lithium sulfide (Mitsuwa Chemicals Co., Ltd.)
1-2. Phosphorus pentasulfide (B)
Phosphorus pentasulfide (Sigma-Aldrich)
1-3. Conductive carbon (C)
Active carbon (Kansai Coke and Chemicals Co., Ltd.; specific surface area: 3000 m²/g)
Acetylene black (Denka Company Limited; specific surface area: 68 m²/g)
1-4. Lithium halide (D)
Lithium iodide (Sigma-Aldrich)
1-5. Red phosphorus
Red phosphorus (Sigma-Aldrich)

### 2. Production of cathode mixture

### (Example 1)

Here, 81 mg of sulfur and 17 mg of lithium sulfide at a weight ratio of sulfur to lithium sulfide of 83:17 as the sulfur and/or its discharge product (A), 50 mg of the phosphorus pentasulfide (B), 20 mg of active carbon as the conductive carbon (C), and 32 mg of lithium iodide as the lithium halide (D) were weighed out. Table 1 shows the weight ratio of the components (A) to (D).

These components were then mixed in a 45-mL pot containing zirconia balls (5 mm, about 40 g) of a planetary ball mill (Premium Line P-7 available from Frilsch; revolution radius: 0.07 m; rotation radius: 0.0235 m; ratio of rotation to revolution: -2) at a revolution speed of 370 rpm for two hours, whereby a cathode mixture for all-solid-state lithium-sulfur batteries was obtained.

### (Comparative Example 1)

The components (A) to (D) of the same raw materials in the same amounts as those in Example 1 were weighed out. The raw materials were mixed in a mortar instead of the ball mill for 30 minutes, whereby a cathode mixture for all-solid-state lithium-sulfur batteries was obtained.

### (Comparative Example 2)

Red phosphorus was used instead of the phosphorus pentasulfide (B). In order to obtain the same elemental ratio as that in Example 1, 117 mg of sulfur and 17 mg of lithium sulfide at a weight ratio of sulfur to lithium sulfide of 87:13 as the sulfur and/or its discharge product (A), 14 mg of the red phosphorus, 20 mg of active carbon as the conductive carbon (C), and 32 mg of lithium iodide as the lithium halide (D) were weighed out.

These components were then mixed in a 45-mL pot containing zirconia balls (5 mm, about 40 g) of a planetary ball mill (Premium Line P-7 available from Frilsch; revolution radius: 0.07 m; rotation radius: 0.0235 m; ratio of rotation to revolution: -2) at a revolution speed of 370 rpm for two hours, whereby a cathode mixture for all-solid-state lithium-sulfur batteries was obtained.

### (Example 2)

A cathode mixture for all-solid-state lithium-sulfur batteries was obtained as in Example 1, except that 100 mg of sulfur and 0 mg of lithium sulfide as the sulfur and/or its discharge product (A), 40 mg of the phosphorus pentasulfide (B), 20 mg of active carbon as the conductive carbon (C), and 40 mg of lithium iodide as the lithium halide (D) were weighed out.

### (Example 3)

A cathode mixture for all-solid-state lithium-sulfur batteries was obtained as in Example 1, except that 90 mg of sulfur and 0 mg of lithium sulfide as the sulfur and/or its discharge product (A), 50 mg of the phosphorus pentasulfide (B), 20 mg of active carbon as the conductive carbon (C), and 40 mg of lithium iodide as the lithium halide (D) were weighed out.

### (Example 4)

A cathode mixture for all-solid-state lithium-sulfur batteries was obtained as in Example 1, except that 85 mg of sulfur and 15 mg of lithium sulfide at a weight ratio of sulfur to lithium sulfide of 83:17 as the sulfur and/or its discharge product (A), 50 mg of the phosphorus pentasulfide (B), 20 mg of active carbon as the conductive carbon (C), and 30 mg of lithium iodide as the lithium halide (D) were weighed out.

### (Example 5)

A cathode mixture for all-solid-state lithium-sulfur batteries was obtained as in Example 1, except that 90 mg of sulfur and 20 mg of lithium sulfide at a weight ratio of sulfur to lithium sulfide of 82:18 as the sulfur and/or its discharge product (A), 50 mg of the phosphorus pentasulfide (B), 20 mg of active carbon as the conductive carbon (C), and 20 mg of lithium iodide as the lithium halide (D) were weighed out.

### (Example 6)

A cathode mixture for all-solid-state lithium-sulfur batteries was obtained as in Example 1, except that 100 mg of sulfur and 19 mg of lithium sulfide at a weight ratio of sulfur to lithium sulfide of 84:16 as the sulfur and/or its discharge product (A), 61 mg of the phosphorus pentasulfide (B), and 20 mg of active carbon as the conductive carbon (C) were weighed out.

### (Comparative Example 3)

The same raw materials in the same amounts as those in Example 6 were mixed in a mortar instead of a ball mill for 30 minutes, whereby a cathode mixture for all-solid-state lithium-sulfur batteries was obtained.

### (Comparative Example 4)

A cathode mixture for all-solid-state lithium-sulfur batteries was obtained as in Example 1, except for using acetylene black (20 mg) instead of active carbon as the conductive material.

### 3. Production of batteries

A stainless steel SUS304 cylindrical jig (10 mm Φ, height 10 mm) as an anode collector was inserted into a polycarbonate cylindrical tube jig (inner diameter 10 mm Φ, outer diameter 23 mm Φ, height 20 mm) from the bottom, and 70 mg of a solid electrolyte (a composite obtained by mixing the following composites at a weight ratio of 90:10: a composite 1 obtained by firing 5Li₂S-GeS₂-P₂S₅ at 510°C for eight hours; and a composite 2 obtained by treating 80Li₂S-20P₂S₅ in a ball mill at 500 rpm for 10 hours) was put into the polycarbonate cylindrical tube jig from the top. Then, a SUS304 cylindrical jig (10 mm Φ, height 15 mm) as a cathode collector was inserted into the polycarbonate cylindrical tube jig from the top to sandwich the solid electrolyte therebetween. The solid electrolyte was pressed at a pressure of 200 MPa for three minutes to form a solid electrolyte layer having a diameter of 10 mm Φ and a thickness of about 0.6 mm.

Next, after the SUS304 cylindrical jig (cathode collector) inserted from the top was pulled out temporarily, the cathode mixture produced in each of Examples 1 to 6 and Comparative Examples 1 to 4 (7.5 mg, each) was put on the solid electrolyte layers in the polycarbonate cylindrical tube, and the SUS304 cylindrical jig (cathode collector) was again inserted from the top. Each cathode mixture was pressed at a pressure of 200 MPa for three minutes to form a cathode mixture layer having a diameter of 10 mm Φ and a thickness of about 0.1 mm.

Next, after the SUS304 cylindrical jig (anode collector) inserted from the bottom was pulled out, a stack of a 0.25-mm-thick lithium sheet (Furuuchi Chemical Co.) punched to a diameter of 8 mm Φ using a hollow punch and a 0.3-mm-thick indium sheet (Furuuchi Chemical Co.) punched to a diameter of 9 mm Φ using a hollow punch as an anode was put into the polycarbonate cylindrical tube jig from the bottom, and the SUS304 cylindrical jig (anode collector) was again inserted from the bottom. The stack was pressed at a pressure of 80 MPa for three minutes to form a lithium-indium alloy anode. All-solid-state lithium-sulfur batteries in which the anode collector, the lithium-indium alloy anode, the solid electrolyte layer, the cathode mixture layer, and the cathode collector were laminated in this order from the bottom were produced in the manner described above.

### 4. Evaluation method

### 4-1. Calculation of index for composite of cathode mixture using 31P-MAS NMR

The 31P-MAS NMR of the cathode mixture produced was recorded using Avance III HD 600WB available from Bruker, with ammonium phosphate (1.0 ppm) as an external standard. Table 1 shows the relative intensity (including spinning side bands) at 50 ppm where the peak of phosphorus pentasulfide occurs, taking the maximum intensity and the minimum intensity of each component as 100 and 0, respectively. The residual amount of phosphorus pentasulfide as a raw material was used as the index for a composite. When the composite formation reaction proceeds until the relative intensity of the peak at 50 ppm reaches 40% or less, the resulting cathode mixture exhibits high battery characteristics.

### 4-2. Evaluation of battery charge/discharge characteristics

The all-solid-state lithium-sulfur batteries produced as above were charged and discharged at a constant current at a current density of 0.64 mA/cm² using a charge/discharge device (ACD-M01A, Aska Electronic Co., Ltd.), and the capacity per cathode mixture of each battery after discharge to 1.0 V was measured. Table 1 shows the results.

**[Table 1]**

| | | Example 1 | Comparative Example 1 | Comparative Example 2 | Example 2 | Example 3 | Example 4 | Example 5 | Example 6 | Comparative Example 3 | Comparative Example 4 |
|---|---|---|---|---|---|---|---|---|---|---|---|
| A | S | 40.5 | 40.5 | 58.5 | 50 | 45 | 425 | 45 | 50 | 50 | 40.5 |
| | Li₂S | 8.5 | 8.5 | 8.5 | | | 7.5 | 10 | 9.5 | 9.5 | 8.5 |
| B | P₂S₅ | 25 | 25 | | 20 | 25 | 25 | 25 | 30.5 | 30.5 | 25 |
| | P | | | 7 | | | | | | | |
| C | Active carbon | 10 | 10 | 10 | 10 | 10 | 10 | 10 | 10 | 10 | |
| | Acetylene black | | | | | | | | | | 20 |
| D | LiI | 16 | 16 | 16 | 20 | 20 | 15 | 10 | | | 16 |
| Intensity ratio @ 50 ppm | | 14 | 98 | 21 | 26 | 17 | 15 | 13 | 11 | 96 | 95 |
| Capacity/m Ah g⁻¹ | | 1250 | < 20 | 490 | 1250 | 1250 | 1320 | 1290 | 1350 | < 20 | < 20 |

Comparative Examples 1 and 3 each resulted in a low charge/discharge capacity because the relative peak intensity at 50 ppm in the 31P-MAS NMR was more than 40%. Comparative Example 4 resulted in a low charge/discharge capacity because the relative peak intensity at 50 ppm in the 31P-MAS NMR was more than 40% due to the use of acetylene black having a smaller specific surface area instead of active carbon as the conductive material. Comparative Example 2 resulted in a low charge/discharge capacity because red phosphorus was used instead of phosphorus pentasulfide as a raw material of the solid electrolyte. Examples 1 to 6 each resulted in a high charge/discharge capacity.

## Claims

1. A positive electrode mixture for composite all-solid-state lithium-sulfur batteries, the positive electrode mixture comprising:
sulfur or its discharge product (A);
phosphorus pentasulfide (B);
conductive carbon (C); and
lithium halide (D) at a weight ratio of A:B:C:D of 40-60:15-35:5-20:16-30,
wherein a peak at 50 ppm in 31P-MAS NMR has a relative intensity of 40% or less.

2. The positive electrode mixture for composite all-solid-state lithium-sulfur batteries according to claim 1,
wherein the conductive carbon (C) has a specific surface area of 1000 m²/g or more.

3. The positive electrode mixture for composite all-solid-state lithium-sulfur batteries according to claim 1 or 2,
wherein the sulfur or its discharge product (A) is a mixture containing sulfur and lithium sulfide at a weight ratio of sulfur:lithium sulfide of 100-70:0-30.

4. The positive electrode mixture for composite all-solid-state lithium-sulfur batteries according to any one of claims 1 to 3,
wherein the lithium halide (D) is lithium iodide.

5. A method of producing a positive electrode mixture for all-solid-state lithium-sulfur batteries, the method comprising
mechanically milling a mixture containing sulfur or its discharge product (A), phosphorus pentasulfide (B), conductive carbon (C), and lithium halide (D) at a weight ratio of A:B:C:D of 40-70:10-50:5-20:1-30.

6. A method of producing a positive electrode mixture for all-solid-state lithium-sulfur batteries, the method comprising
mechanically milling a mixture containing sulfur or its discharge product (A), phosphorus pentasulfide (B), conductive carbon (C), and lithium halide (D) at a weight ratio of A:B:C:D of 40-70:10-50:5-20:0-30 at a gravitational acceleration of 20 G or less for 10 hours or less.

7. The production method according to claim 5 or 6,
wherein a peak at 50 ppm in 31P-MAS NMR of the cathode mixture has a relative intensity of 40% or less.

8. The production method according to any one of claims 5 to 7,
wherein the conductive carbon (C) has a specific surface area of 1000 m²/g or more.

9. The production method according to any one of claims 5 to 8,
wherein the sulfur or its discharge product (A) is a mixture containing sulfur and lithium sulfide at a weight ratio of sulfur:lithium sulfide of 100-70:0-30.

10. The production method according to any one of claims 5 to 9,
wherein the lithium halide (D) is lithium iodide.
